# EUROPÄISCHE PATENTANMELDUNG

(11) **EP 1 281 910 A2**
(43) Veröffentlichungstag der Anmeldung: **05.02.2003**
(21) Anmeldenummer: 02017468.6
(22) Anmeldetag: 05.08.2002
(51) Int. Cl.: F16L 55/165, F16L 21/035

(54) **Rohrreliningvorrichtung**

(30) Priorität: 04.08.2001 DE 20112746 U
(71) Anmelder: Stadlmayer Peter, 87719 Mindelheim (DE)
(72) Erfinder: Stadlmayer Peter, 87719 Mindelheim (DE)
(74) Vertreter: Fiener, Josef

(57) **Zusammenfassung**

Die Erfindung betrifft eine Rohrreliningvorrichtung für Rohrleitungen mit abschnittsweiser Revisionsmöglichkeit, insbesondere Kanalhaltungen mit Revisionsschächten, wobei einzelne Rohrstücke (1) miteinander verbindbar und stückweise in die zu sanierende Rohrleitung einführbar sind. Zur Erhöhung der Lebensdauer wird vorgeschlagen, daß die Rohrstücke (1) aus Edelstahl bestehen und an Muffen (1') miteinander verbunden sind.

## Beschreibung

Die Erfindung betrifft eine Rohrreliningvorrichtung, bei der einzelne, zusammengefügte Rohrstücke in die zu sanierende Leitung eingeführt werden, insbesondere bei Kanalhaltungen.

Die Sanierung von Abwasserleitungen erlangt eine immer größer werdende Bedeutung, weil das vorhandene Leitungsnetz aufgrund der Altersstruktur in großen Teilen an den Grenzen der gewöhnlichen Nutzungsdauer angelangt ist. Das Austauschen der Abwasserrohre mit Erdarbeiten und Grabenverbau ist jedoch sehr teuer. Daneben gibt es auch Sanierungsverfahren (sog. Inlinerverfahren), wobei ein Kunststoffschlauch in die Kanalleitung von den Revisionsschächten aus eingebracht wird, wodurch die Dichtheit der Kanalhaltung wieder hergestellt werden kann.

Aus der DE 3129870 A1 ist ein Verfahren zum Instandsetzen von Abwasserleitungen bekannt, wobei ein Kunststoffrohr, vorzugsweise auf Polyurethanbasis, mit einem geringeren Durchmesser als der lichte Durchmesser des zu sanierenden Rohres in dieses eingebracht wird. Dies geschieht durch umständliches Zersägen eines Kunststoffrohrs in Rohrstücke, deren Länge etwas geringer ist als der Durchmesser eines Revisionsschachtes. Das erste, in die Kanalhaltung einzubringende Rohrstück wird an einen Seilzug angekoppelt und ein kurzes Stück in die defekte Kanalhaltung eingezogen. Anschließend wird das Rohrstück an einer Spannvorrichtung befestigt, wobei ein Teil der Spannvorrichtung frei bleibt, auf der das nächste Rohrstück aufgelegt wird. Mit Hilfe eines elektrischen Schweißspiegels werden beide Rohrstücke miteinander verbunden. Nach dem Lösen der Befestigung werden beide Rohrstücke um eine Rohrstücklänge in die Kanalhaltung vom Seilzug eingezogen. Dieser Vorgang wird solange wiederholt, bis die gesamte Kanalhaltung zwischen beiden Revisionsschächten über die sanierende, innere Kunststoffrohrleitung verfügt. Anschließend erfolgt noch das Verpressen des Zwischenraumes zwischen alter Kanalleitung und neuer Kunststoffrohrleitung mit Polyesterbeton auf Kunststoffbasis, wobei am Kunststoffrohr- bzw. Haltungsende ein Trichter aufgebracht wird.

Nachteilig ist hierbei, daß die Sanierung einen hohen Arbeitsaufwand erfordert und mit Hilfe von Kunststoffleitungen erfolgt. Bei hoher Beanspruchung, beispielsweise bei Unternehmen der Getränkeindustrie, insbesondere Brauereien, ergibt sich nur eine kurze Lebensdauer der Kunststoffleitungen, da diese den hohen chemischen, mechanischen und thermischen Belastungen durch Glasscherben und starken Temperaturschwankungen im Abwasser auf Dauer nicht gewachsen sind.

Demzufolge liegt der Erfindung die Aufgabe zugrunde, eine Rohrreliningvorrichtung zu schaffen, die die vorstehenden Nachteile beseitigt, insbesondere einfach einzubringen ist und eine besonders hohe Lebensdauer ermöglicht.

Diese Aufgabe wird gelöst durch ein Rohrreliningvorrichtung gemäß den Merkmalen des Patentanspruchs 1. Vorteilhafte Ausgestaltungen sind Gegenstand der abhängigen Ansprüche.

Neuerungsgemäß wird hierbei das Relining mit vorgefertigten Rohrstücken aus Edelstahl durchgeführt, wodurch sich auch bei hohen Beanspruchungen eine große Standzeit ergibt. Das Sanierungssysstem besteht dabei im wesentlichen nur aus zwei Komponenten, nämlich einem Rohrstück, welches in die Kanalhaltung eingebracht wird und einem Gerinneteil, welches am Boden des Revisionsschachtes fixiert wird. Das Edelstahl-Rohrstück weist eine Einbaulänge von vorzugsweise 70 cm auf. Es kann damit in jeden gängigen Revisionsschacht in Längsrichtung eingeführt werden. Eine Muffenverbindung dient zur Verbindung und Abdichtung der Edelstahl-Rohrstücke untereinander. Dabei ist am Ende mit dem geringeren Durchmesser eine Dichtung, vorzugsweise als Gleitkeildichtung, ein Steg zur Rohr versteifung und eine Mutter für eine einzusetzende Schraube zur Sicherung des Rohres angebracht. Am größeren Ende ist an der Muffe ein Langloch ausgebildet, wodurch mit der eingesetzten Schraube die beiden Edelstahlrohre gegen Verdrehen gesichert werden können. Das Langloch und die darin eingefügte Schraube ermöglicht darüber hinaus eine Verschieblichkeit bzw. ein Spiel in Längsrichtung zwischen den Edelstahlrohren. Geringfügigen Biegungen im Altrohr kann durch diese Flexibilität in der Muffenverbindung der Edelstahlrohre problemlos gefolgt werden.

Das ebenfalls aus Edelstahl bestehende Gerinneteil mit einer Einbaulänge von vorzugsweise 90 cm für einen Standardrevisionsschacht verfügt über eine vorzugsweise rechteckige, obere Öffnung als Revisionsmöglichkeit, deren Oberkante ungefähr ein Drittel des Durchmessers des Edelstahlrohres über dem Scheitel desselben liegt. Damit besteht auch bei nahezu vollständig gefülltem Abfluß im Edelstahlrohr nicht die Gefahr, daß Abwasser auf den Schachtboden gelangt. Zusätzlich sind an den Enden der Bleche dieser Öffnungen Stege mit einer Querneigung von ungefähr 10° nach innen angebracht. Die von oben einfach einschiebbaren Anschlußstücke am Edelstahl-Gerinneteil sind entsprechend zu den Enden der Edelstahlrohre ausgebildet. Hierbei ist zusätzlich noch ein Quellband zur Verhinderung von Grundwasseraufstieg sowohl an den beiden Anschlußstücken als auch am eigentlichen Edelstahl-Gerinneteil an der Außenwandung angebracht. Diese Abschlußbleche erleichtern das Befestigen wesentlich, was zusätzlich noch mit Spezialkanalmörtel erfolgen kann. An vorzugsweise vier Laschen je Edelstahl-Gerinneteil kann eine zusätzliche Fixierung mit Dübeln vorgenommen werden.

Die einzelnen Edelstahlrohre werden vorzugsweise vom Revisionsschacht aus in die zu sanierende Kanalhaltung hydraulisch eingepreßt. Daneben ist auch ein Einziehen mit einem Seilzug vom folgenden Revisionsschacht aus möglich. Hierbei erfolgt nach dem Einfügen des ersten Edelstahlrohres in die Kanalhaltung die Verbindung zum zweiten Edelstahlrohre mit einer Schraube am Langloch der Muffenverbindung im Revisionsschacht bzw. noch in der Halbschale der Hydraulikpresse. Nach erfolgter Einpressung wird dieser Vorgang solange wiederholt, bis die gesamte Kanalhaltung bis zum nächsten Revisionsschacht mit Edelstahlrohren ausgekleidet ist. Geringe, fehlende Längen unterhalb der Länge eines Edelstahlrohre können im nächsten Revisionsschacht beispielsweise dadurch ausgeglichen werden, daß durch Aufbringen von Zugkraft am ersten Edelstahlrohr die Längs-Verschieblichkeit der Edelstahlrohre aufgrund der Langloch-Schraubenverbindung an der Muffe ausgenützt wird. Ein aufwendiges Abschneiden kann dadurch beispielsweise vermieden werden.

Nach erfolgtem Einbau der Edelstahlrohre wird das bereits mit den Edelstahlrohren verbundene Edelstahl-Gerinneteil am Revisionsschachtboden mit Dübeln befestigt. Anschließend wird der Ringspalt zwischen Edelstahlrohr und Altleitung im Schachtbereich verpreßt. Zusätzlich wird das Edelstahl-Gerinneteil und die Edelstahlrohre zwischen den Abschlußblechen und der Wand des Revisionsschachtes mit vorzugsweise Spezialkanalmörtel verbunden, d.h. die Edelstahlrohre im Schachtbereich eingemörtelt. Nach dem Abbinden des Mörtels können noch Seiteneinläufe in den Kanalhaltungen von einem Spezialkanalroboter ausformt werden, welcher vorzugsweise über die Revisionsöffnung des Edelstahl-Gerinneteils eingeführt wird. Der Kanal ist damit wieder funktionsfähig.

Zur Energieeinsparung ist es auch möglich, an den Edelstahlrohren einen Wärmeaustauscher vorzusehen. Mit einer Trägerflüssigkeit kann damit dem Abwasser Wärme entzogen und über den Revisionsschacht der weiteren Verwendung zugeführt werden. Neben der Abdichtung ist in diesem Fall auch eine Wärmerückgewinnung mit der Kanalsanierung verbunden.

Nachfolgend wird ein Ausführungsbeispiel anhand der Zeichnungen näher erläutert und beschrieben. Hierbei zeigen:
- Fig. 1: einen Längsschnitt eines Edelstahlrohres;
- Fig. 2: einen Längsschnitt bzw. eine Seitenansicht eines Edelstahl-Gerinnesteils; und
- Fig. 3: einen Querschnitt eines Edelstahl-Gerinneteils.

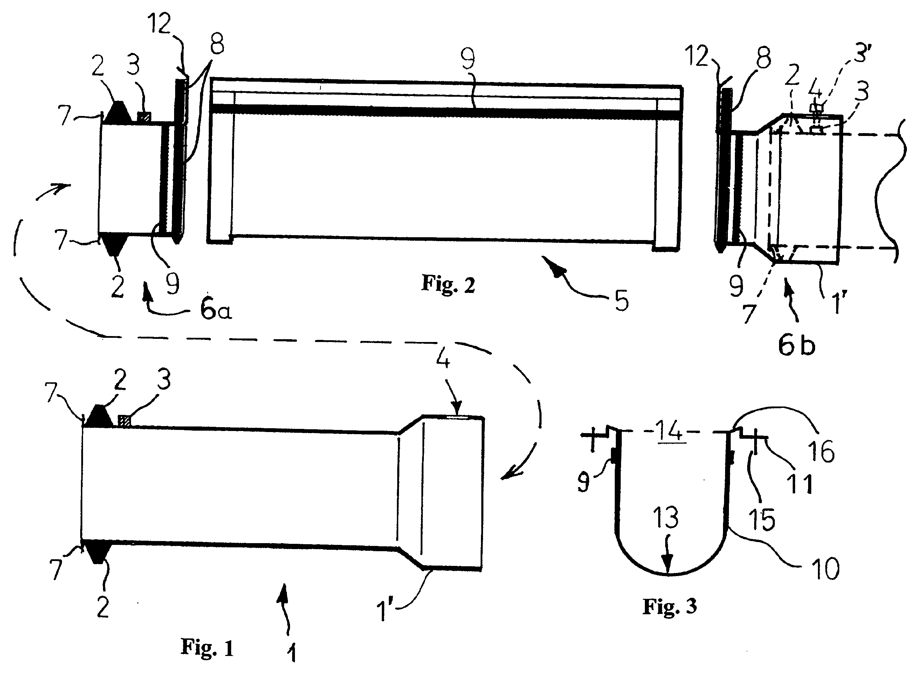

In Fig. 1 ist der Längsschnitt eines Edelstahlrohres 1 dargestellt. Hierbei ist an der größeren Seite mit der Muffe 1' ein Langloch 4 für eine Schraube zur Verbindung der Edelstahlrohre 1 untereinander ausgebildet, z.B. ausgestanzt. An der anderen Seite ist ein abgekanteter Steg 7 zur Rohrversteifung ausgebildet. Eine Gleitkeildichtung 2, insbesondere nach DIN 4060, dient der Abdichtung der Muffenverbindung. Eine am Edelstahlrohr 1 fixierte Mutter 3 befestigt die Schraube 3' (vgl. Fig. 2, rechts), welche am Langloch 4 für die verdrehsichere Verbindung der Edelstahlrohre 1 untereinander eingefügt wird. Das Langloch 4 erlaubt durch diese Axialspielverbindung zusätzlich eine geringe Verschieblichkeit der Edelstahlrohre 1 untereinander. Die Einbaulänge des Edelstahlrohres 1 beträgt etwa 70 cm, wobei das Langloch 4 etwa 5 cm lang ist, so daß sich ein Axialspiel von einigen Zentimetern ergibt.

In Fig. 2 ist ein Längsschnitt eines Edelstahl-Gerinneteils 5 dargestellt. An den beiden Enden sind die jeweiligen Anschlußteile 6a und 6b für die Edelstahlrohre 1 ausgebildet, welche zeichnerisch vom Hauptteil (vgl. auch den Doppelpfeil zu Fig. 1) verschoben sind. Das Anschlußteil 6a ist analog zu dem entsprechenden Ende eines Edelstahlrohres 1 mit Steg 7, Mutter 3 und Gleitkeildichtung 2 ausgestattet. Zusätzlich ist am Abschlußblech 12 noch eine Gleitkeildichtung 8 zur Verbindung (durch Einschieben von oben) mit dem Gerinneteil 5 aufgebracht. Das Anschlußteil 6b weist ein Langloch 4 für die Schraube 3' sowie zusätzlich eine Gleitkeildichtung 8 am Abschlußblech 12 auf. Ein Quellband 9 an den beiden Anschlußteilen 6a und 6b sowie an der Außenwandung 10 des Edelstahl-Gerinneteils 5 verhindert einen Grundwasseraufstieg. Die Einbaulänge dieses Edelstahl-Gerinneteils 5 beträgt etwa 90 cm.

In Fig. 3 ist der Querschnitt eines Edelstahlgerinneteils 1 dargestellt. Neben den eigentlichen Gerinne 13, das dem Abfluß des Abwassers dient, ist eine obere Öffnung 14 als Revisionsmöglichkeit ausgebildet. An seitlichen Laschen 11 erfolgt die Fixierung am Revisionsschachtboden mit Dübeln 15. Obere Stege 16 mit einer Neigung von ca. 10° nach innen dienen dazu, beispielsweise Spritzwasser nach innen zurückzuleiten.

Insgesamt wird mit der vorliegenden Reliningvorrichtung eine zuverlässige Möglichkeit geschaffen, schwer zugängliche Leitungen mit Revisionsmöglichkeit, insbesondere Abwasserhaltungen, dauerhaft zu sanieren. Die herkömmlichen, im Abwasserbereich bekannten Sanierungsverfahren sind zwar vom Materialaufwand kostengünstiger, verfügen jedoch in Bereichen mit hohen mechanischen, thermischen und chemischen Beanspruchungen nur über eine kurze Standzeit. In der vorliegenden Erfindung wird durch die Verwendung von Edelstahl eine dauerhafte Sanierung gewährleistet. Die höheren Kosten amortisieren sich somit in kurzer Zeit, womit dieses Verfahren langfristig kostengünstiger ist.

## Patentansprüche

1. Rohrreliningvorrichtung für Rohrleitungen mit abschnittsweiser Revisionsmöglichkeit, insbesondere Kanalhaltungen mit Revisionsschächten, wobei einzelne Rohrstücke miteinander verbindbar und stückweise in die zu sanierende Rohrleitung einführbar sind,
**dadurch gekennzeichnet, daß**
die Rohrstücke (1) aus Edelstahl bestehen und an Muffen (1') miteinander verbunden sind.

2. Rohrreliningvorrichtung nach Anspruch 1, **dadurch gekennzeichnet, daß**
als Verdrehsicherung eine Schraube (3') eingesetzt ist, die in ein Langloch (4) an der Muffe (1') eingreift.

3. Rohrreliningvorrichtung nach Anspruch 1 oder 2, **dadurch gekennzeichnet, daß**
zur Abdichtung des Rohrstücks (1) eine Gleitkeildichtung (2) vorgesehen ist.

4. Rohrreliningvorrichtung nach einem der Ansprüche 1 bis 3,
**dadurch gekennzeichnet, daß**
an dem der Muffe (1') entgegengesetzten Ende des Rohrstücks (1) ein Steg (7) zur Rohrversteifung ausgebildet ist.

5. Rohrreliningvorrichtung nach einem der vorhergehenden Ansprüche, **dadurch gekennzeichnet, daß**
am Revisionsschacht ein Gerinneteil (5) mit jeweiligen Anschlußteilen (6a; 6b) für die Rohrstücke (1), einer Revisionsöffnung (14) und vorzugsweise einem Quellband (9) eingefügt ist.

6. Rohrreliningvorrichtung nach Anspruch 5, **dadurch gekennzeichnet, daß**
an der Oberseite des Gerinneteils (5) je ein seitlicher Steg (16) mit Neigung nach innen ausgebildet ist.

7. Rohrreliningvorrichtung nach einem der vorhergehenden Ansprüche, **dadurch gekennzeichnet, daß**
die Rohrstücke (1) in die zu sanierende Leitung hydraulisch einpreßbar sind.

8. Rohrreliningvorrichtung nach einem der Ansprüche 5 bis 7,
**dadurch gekennzeichnet, daß**
an dem Gerinneteil (5) Abschlußbleche (12) von oben her einsteckbar sind.

9. Rohrreliningvorrichtung nach einem der Ansprüche 5 bis 8,
**dadurch gekennzeichnet, daß**
zur Befestigung des Gerinneteils (5) Dübel (15) an seitlich abkragenden Laschen (11) vorgesehen sind.

10. Rohrreliningvorrichtung nach einem der vorhergehenden Ansprüche, **dadurch gekennzeichnet, daß**
an den Rohrstücken (1) ein Wärmeaustauscher zur Wärmerückgewinnung angeordnet ist.
